# EUROPÄISCHE PATENTSCHRIFT

(11) **EP 2 098 725 B1**
(45) Veröffentlichungstag und Bekanntmachung des Hinweises auf die Patenterteilung: **25.02.2015**
(21) Anmeldenummer: 09003009.9
(22) Anmeldetag: 03.03.2009
(51) Int. Cl.: F03D 7/02

(54) **Verfahren zum Betreiben einer Windenergieanlage und Windenergieanlage**
Method for operating a wind farm and wind farm
Procédé de fonctionnement d'une éolienne et éolienne

(30) Priorität: 06.03.2008 DE 102008012957
(43) Veröffentlichungstag der Anmeldung: 09.09.2009
(60) Teilanmeldung: 14183491.1
(73) Patentinhaber: Senvion SE, 22297 Hamburg (DE)
(72) Erfinder: Steudel, Dirk, 24116 Kiel (DE); Von Mutius, Martin, 24358 Ascheffel (DE)
(74) Vertreter: Seemann, Ralph

(56) Entgegenhaltungen:
- EP-A2- 1 612 414
- WO-A1-2005/116445
- WO-A2-2008/009354
- DE-A1-102004 054 608
- DE-A1-102006 001 613
- US-A1- 2007 018 457

## Beschreibung

Die Erfindung betrifft ein Verfahren zum Betreiben einer Windenergieanlage mit einem Rotor, der wenigstens ein winkelverstellbares Rotorblatt aufweist, wobei ein Betriebsparameter durch ein Erfassungsverfahren ermittelt wird und, insbesondere durch ein von einem Betriebsführungssystem unabhängiges Sicherheitssystem, überwacht wird und bei Erreichen eines Betriebsparametergrenzwertes, insbesondere durch das Sicherheitssystem, ein Abbremsvorgang des Rotors eingeleitet wird.

Die Erfindung betrifft außerdem eine Windenergieanlage mit einem Rotor, der wenigstens ein winkelverstellbares Rotorblatt aufweist, wobei die Windenergieanlage ein Betriebsführungssystem umfasst, wobei ein Sicherheitssystem zum Überwachen wenigstens eines Betriebsparameters vorgesehen ist, wobei das Sicherheitssystem in dem Betriebsführungssystem ein Signal zum Abbremsen des Rotors liefert und/oder das Abbremsen des Rotors einleitet, sobald der wenigstens eine Betriebsparameter einen Betriebsparametergrenzwert erreicht.

Entsprechende Verfahren und eine entsprechende Windenergieanlage sind beispielsweise aus der DE 10 2006 001 613 A1 bekannt.

Windenergieanlagen weisen üblicherweise ein Betriebsführungssystem auf, das die Betriebsführung von Windenergieanlagen steuert und/oder regelt und auch die Steuerung und/oder Regelung in verschiedenen Betriebszuständen übernimmt.

Aus DE 10 2004 054 608 A1 ist ein Verfahren zur Regelung einer Windenergieanlage bekannt, wobei die Windenergieanlage oberhalb eines definierten Grenzwertes für einen Rotorblattwinkel auf reduzierte Leistung bzw. Drehzahl geregelt wird. Der Grenzwert markiert dabei den Übergang zwischen einem Nennleistungsbereich und einem oberen Teillastbereich.

In US 2007/018457 A1 wird vorgeschlagen, den Übergang zwischen Nennleistungsbereich und oberem Teillastbereich anhand einer oder mehrerer Variablen mit entsprechenden Grenzwerten zu definieren.

Versagt das Betriebsführungssystem, gewährleistet ein von dem Betriebsführungssystem unabhängiges Sicherheitssystem, dass die Windenergieanlage in einem sicheren Zustand verbleibt. Dieses Sicherheitssystem ist im Stand der Technik an einen Betriebsmodus der Windenergieanlage mit Nenndrehzahl bzw. einen leistungsoptimierten Normalbetrieb angepasst.

Aus WO 2008/009354 A1 ist bekannt, eine Windenergieanlage nach einer Sicherheitsabschaltung mittels einer von der Windenergieanlage räumlich getrennten Bedieneinrichtung wieder zum Betrieb freizugeben.

Eine Windenergieanlage wird allerdings unter Umständen auch in einem weiteren Betriebsmodus betrieben, der insbesondere drehzahl- und/oder leistungsreduziert ist. Hierbei handelt es sich beispielsweise um einen schallreduzierten Betrieb, eine Leistungsbegrenzung aufgrund von Wartungs- oder Reparaturarbeiten oder um einen Betrieb bei einer begrenzten Netzkapazität, bei der also beispielsweise die von der Windenergieanlage mögliche Leistung nicht vollständig in das Netz abgegeben werden kann. Insbesondere bei dem weiteren Betriebszustand bzw. dem zweiten Betriebsmodus außerhalb des Betriebs mit Nenndrehzahl bzw. eines Betriebes, der auch als leistungsoptimierter Normalbetrieb bezeichnet werden kann, kann es Lastfälle bzw. Störungen geben, die zu Schädigungen der Windenergieanlage führen können.

Aus diesem Grunde ist es Aufgabe der vorliegenden Erfindung, die Betriebssicherheit einer Windenergieanlage zu verbessern sowie die Belastung einer Windenergieanlage zu reduzieren, und zwar insbesondere in einem Betriebsmodus außerhalb eines leistungsoptimierten Normalbetriebs.

Die Aufgabe wird gelöst durch ein Verfahren zum Betreiben einer Windenergieanlage mit einem Rotor, der wenigstens ein winkelverstellbares Rotorblatt aufweist, wobei ein Betriebsparameter durch ein Erfassungsverfahren ermittelt wird und durch ein von einem Betriebsführungssystem unabhängiges Sicherheitssystem überwacht wird und bei Erreichen eines Betriebsparametergrenzwertes durch das Sicherheitssystem ein Abbremsvorgang des Rotors eingeleitet wird, das dadurch weitergebildet ist, dass die Windenergieanlage in einem ersten Betriebsmodus oder einem zweiten Betriebsmodus betrieben wird, wobei der erste Betriebsmodus ein leistungsoptimierter Normalbetrieb ist und der zweite Betriebsmodus ein drehzahlreduzierter und/oder leistungsreduzierter Betriebsmodus außerhalb des leistungsoptimierten Normalbetriebs ist, wobei der Betriebsparameter eine Rotorbeschleunigung ist und im ersten Betriebsmodus und/oder zweiten Betriebsmodus ein Abbremsvorgang des Rotors eingeleitet wird, wenn eine Rotorbeschleunigung vorherrscht, die größer als ein Rotorbeschleunigungsgrenzwert ist.

Durch Anpassen des Betriebsparametergrenzwertes der Windenergieanlage wird ein sicherer Betrieb der Windenergieanlage erreicht. Unter Anpassen des Betriebsparametergrenzwertes kann beispielsweise ein Verringern eines Drehzahlgrenzwertes verstanden werden oder ein Verringern oder auch Erhöhen eines Rotorbeschleunigungsgrenzwertes oder das Verändern eines Rotorblattwinkelverstellratengrenzwertes. Unter Anpassen eines Betriebsparametergrenzwertes wird insbesondere ein Verändern des Grenzwertes relativ zum Grenzwert beim leistungsoptimierten Normalbetrieb verstanden. Da es sich um sicherheitsrelevante Grenzwerte handelt, sind die möglichen Grenzwertanpassungen eindeutig vorab festgelegt, z.B. in Form von Wertetabellen oder mathematischen Funktionen, wie beispielsweise lineare oder quadratische Funktionen.

Unter Anpassen des Erfassungsverfahrens des Betriebsparameters wird insbesondere ein Verändern des Filterungs- und/oder Mittelungsverfahrens bei der Erfassung des Betriebsparameters verstanden. Ist der Betriebsparameter beispielsweise die Drehzahl, kann die Anpassung des Erfassungsverfahrens im Rahmen der Erfindung eine Reduzierung der Mittelungszeit sein. Wird im Normalbetrieb beispielsweise die Drehzahl als 5 s-Mittelwert erfasst, kann dieses im drehzahlreduzierten Betrieb jedoch beispielsweise als 50 ms-Mittelwert geschehen, so dass die Anpassung des Erfassungsverfahrens bei einer plötzlichen Drehzahlzunahme einen ähnlichen Effekt auf den Betrieb der Windenergieanlage hat wie eine deutliche Reduzierung des Drehzahlgrenzwerts im drehzahlreduzierten Betrieb.

Es liegt hierbei die Erkenntnis zugrunde, dass eine Veränderung des Erfassungsverfahrens eines Betriebsparameters bei einem unveränderten Betriebsparametergrenzwert im Vergleich zu einer Anpassung des Betriebsparametergrenzwertes ohne Veränderung des Erfassungsverfahrens eine entsprechende Wirkung auf den Betrieb der Windenergieanlage hat. Im Folgenden soll damit, wenn von Anpassung des Grenzwertes die Rede ist, auch die Anpassung des Erfassungsverfahrens des Betriebsparameters umfasst sein, ohne dass dieses explizit erwähnt wird.

Es kann vorgesehen sein, dass der Betriebsparameter eine Drehzahl eines Rotors ist, wobei im ersten Betriebsmodus ein Abbremsvorgang des Rotors eingeleitet wird, wenn eine Drehzahl des Rotors überschritten wird, die oberhalb eines ersten Drehzahlgrenzwertes liegt und wobei im zweiten Betriebsmodus ein Abbremsvorgang des Rotors eingeleitet wird, wenn die Drehzahl des Rotors größer als ein zweiter Drehzahlgrenzwert ist, wobei der zweite Drehzahlgrenzwert kleiner als der erste Drehzahlgrenzwert ist.

Es ist erkannt worden, dass zum einen durch Absenkung eines Drehzahlgrenzwertes, ab dessen Erreichen ein Bremsvorgang des Rotors, sei es durch Verstellen des Rotorblattverstellwinkels in Richtung Fahnenstellung bzw. durch Eingreifen einer mechanischen Bremse oder durch weitere Bremsmaßnahmen, in einem zweiten Betriebsmodus, der ein drehzahl- und/oder leistungsreduzierter Modus ist, dazu führt, dass die Betriebssicherheit der Windenergieanlage deutlich erhöht ist. Erfindungsgemäß oder ergänzend hierzu ist ein Rotorbeschleunigungsgrenzwert bzw. eine Überwachung eines Rotorbeschleunigungsgrenzwertes eingeführt worden, so dass ab Erreichen einer Rotorbeschleunigung, die größer als der Rotorbeschleunigungsgrenzwert ist, ein entsprechender Abbremsvorgang des Rotors vorgenommen wird. Hierdurch ist erfindungsgemäß die Betriebssicherheit der Windenergieanlage deutlich erhöht.

Der erste Betriebsmodus ist ein leistungsoptimierter Normalbetrieb der Windenergieanlage, entspricht also einem Betrieb der Windenergieanlage mit einer Drehzahlkennlinie, die bei der Auslegung einer Windenergieanlage als Drehzahlkennlinie für maximale Leistungsabgabe vorgesehen wird. Dieses wird in der Regel durch eine Zulassungsbehörde in einer Typenprüfung dokumentiert und entsprechend zertifiziert.

Die Drehzahlkennlinie ist eine Kennlinie in einer Funktionalität der Drehzahl in Abhängigkeit der Leistung bzw. des Drehmoments oder umgekehrt der Leistung in Abhängigkeit der Drehzahl bzw. des Drehmoments in Abhängigkeit der Drehzahl. Diese Kennlinie und damit der leistungsoptimierte Normalbetrieb kann sowohl im Teillast- als auch im Volllastbereich gelten, wobei im Volllastbereich in der Regel eine konstante Drehzahl eingestellt wird. Insbesondere im Übergangsbereich von Teillast zu Volllast können Betriebszustände in der Windenergieanlage entstehen, die stark Anlagen belastend sind. Ein derartiger Störfall ist beispielsweise ein Betriebsführungsfehler, der dafür sorgt, dass der Rotorblattverstellwinkel in Richtung auf 0° gefahren wird, also auf eine maximale Angriffsfläche gegenüber dem einfallenden Wind. Wenn dieses geschieht und der Drehzahlgrenzwert gegenüber dem im leistungsoptimierten Normalbetrieb nicht reduziert ist bzw. kein entsprechender vorgebbarer Rotorbeschleunigungsgrenzwert vorgesehen ist, wird der Störfall vom Sicherheitssystem zu spät erkannt und es können auf die Windenergieanlage sehr hohe Belastungen einwirken. Im Rahmen der Erfindung ist der Rotorbeschleunigungsgrenzwert vorzugsweise vorgebbar und/oder der erste und/oder zweite Drehzahlgrenzwert vorgebbar.

Besonders bevorzugt ist das Verfahren dadurch weitergebildet, dass außerdem eine Rotorblattwinkelverstellrate, insbesondere im zweiten Betriebsmodus, überwacht wird. Hierbei kann beispielsweise überwacht werden, ob der eben beschriebene Betriebsführungsfehler auftritt, dass der Rotorblattverstellwinkel in Richtung 0° gefahren wird. In diesem Fall wird die Rotorblattwinkelverstellrate als negativ definiert. Ab einer gewissen negativen Rotorblattwinkelverstellrate kann dann auch ein Abbremsvorgang, vorzugsweise ein Abbremsvorgang des Rotors, eingeleitet werden, wenn nämlich die Rotorblattwinkelverstellrate einen Rotorblattwinkelverstellratengrenzwert erreicht. Diese Überwachung der Rotorblattwinkelverstellrate dient in erster Linie dazu, den Betriebszustand der Windenergieanlage zu definieren, um auszuschließen, dass die Windenergieanlage sich z.B. gerade in einem Start- oder Stopp- oder Umschaltvorgang oder im transienten Betrieb durch eine extreme Turbulenz befindet, bei dem auch große Rotorbeschleunigungen auftreten können, die dann aber durch eine Blattverstellung mit hoher positiver Blattverstellrate ausgeregelt werden.

Vorzugsweise wird der Abbremsvorgang bei Kombination des Erreichens des Rotorblattwinkelverstellratengrenzwertes durch die Überwachung der Rotorblattwinkelverstellrate mit einem Überschreiten des zweiten Drehzahlgrenzwertes durch die Drehzahl des Rotors und/oder mit einem Überschreiten des Rotorbeschleunigungsgrenzwertes durch die Rotorbeschleunigung eingeleitet. Hierdurch ist ein noch sichereres Betriebsverfahren einer Windenergieanlage möglich. Der Rotorblattwinkelverstellratengrenzwert wird beispielsweise erreicht, wenn eine negative Rotorblattwinkelverstellrate erreicht ist, die vom Betrag her größer oder gleich zu dem Betrag eines negativen Grenzwertes ist. Wenn der Grenzwert beispielsweise -1,5° ist, ist dieser erreicht, wenn die Winkelverstellrate -1,5° oder weniger beträgt (beispielsweise -1,51°), also eine Verstellung in Richtung eines Blattwinkels von 0°.

Vorzugsweise ist der Rotorblattwinkelverstellratengrenzwert in Abhängigkeit des Rotorbeschleunigungsgrenzwertes und/oder des zweiten Drehzahlgrenzwertes angepasst. Vorzugsweise ist der Rotorbeschleunigungsgrenzwert in Abhängigkeit des Rotorblattwinkelverstellratengrenzwertes und/oder des zweiten Drehzahlgrenzwertes angepasst.

Vorzugsweise ist der zweite Drehzahlgrenzwert in Abhängigkeit des Rotorbeschleunigungsgrenzwertes und/oder des Rotorblattwinkelverstellratengrenzwertes angepasst. Durch die Anpassung der entsprechenden Grenzwerte kann die Anlagenbelastung deutlich reduziert werden. Beispielsweise kann der Rotorbeschleunigungsgrenzwert etwas höher gesetzt werden, während der zweite Drehzahlgrenzwert bzw. der Betrag der, insbesondere negativen, Pitchrate oder Rotorblattwinkelverstellrate etwas niedriger angesetzt wird. Dieses kann auch umgekehrt geschehen. Es kann auch der Rotorbeschleunigungswert etwas höher gesetzt werden, während der Betrag der negativen Rotorblattverstellrate etwas niedriger angesetzt wird.

Ein Betriebsmodus außerhalb des leistungsoptimierten Normalbetriebs ist im Rahmen der Erfindung ein Betriebsmodus eines Betriebes mit einer Drehzahlkennlinie, die außerhalb einer Drehzahlkennlinie ist, die für maximale Leistungsabgabe vorgesehen ist. Insbesondere ist hiermit gemeint, dass in einem funktionalen Zusammenhang der Drehzahl über der Leistung bzw. der Drehzahl über dem Drehmoment ein Modus unterhalb dieser Drehzahlkennlinie für maximale Leistungsabgabe vorgesehen ist. Vorzugsweise ist dieser Modus ein Modus, bei dem maximal 95 % der Drehzahl bei entsprechender Leistung oder entsprechendem Drehmoment erreicht wird.

Weiterhin kann ein Betriebsmodus außerhalb des leistungsoptimierten Normalbetriebs auch eine einfache Begrenzung der zulässigen Maximaldrehzahl und/oder Maximalleistung sein. Hierbei wird dann die Drehzahlkennlinie nicht notwendigerweise verändert, sondern möglicherweise nur im oberen Bereich begrenzt bzw. abgeschnitten

Vorzugsweise geschieht das Anpassen des Betriebsparametergrenzwertes im Betrieb der Windenergieanlage. Wenn beispielsweise nur 50 % der erzeugten Leistung der Windenergieanlage in ein Netz aufgrund begrenzter Netzkapazität abgegeben werden kann, könnte eine Betriebskennlinie in einem Betriebsmodus außerhalb eines leistungsoptimierten Normalbetriebs vorgesehen sein, der nur 50 % der Leistung bei entsprechender Drehzahl in einer dann angepassten Drehzahlkennlinie vorsieht. Wenn dann die Netzkapazität sich wieder erhöht, kann ein etwaiger Betriebsparametergrenzwert, beispielsweise der Drehzahlgrenzwert, wieder etwas erhöht werden, da ausreichend Drehmoment aus dem System durch den Generator wieder entnommen werden kann.

Vorzugsweise sind die Betriebsmodi mit zugehörigen Grenzwerten vorbestimmt, sodass bei vordefinierten Bedingungen sowohl der Betriebsmodus als auch der zugehörige Grenzwert umgeschaltet wird.

Vorzugsweise ist der zweite Betriebsmodus ein drehzahlreduzierter, leistungsreduzierter und/oder drehmomentreduzierter Betrieb der Windenergieanlage. Dieser Modus ist beispielsweise dann vorgesehen, wenn Wartungs- oder Reparaturarbeiten bzw. insbesondere ein schallreduzierter Betrieb vorgesehen ist. Bei einem schallreduzierten Betrieb wird vorzugsweise ein drehzahlreduzierter Betriebsmodus verwendet.

Vorzugsweise ist der überwachte Betriebsparameter eine Drehzahl des Rotors, eine Beschleunigung des Rotors, ein Rotorblattverstellwinkel, eine Rotorblattwinkelverstellrate, eine Rotorblattverstellwinkelbeschleunigung, ein Rotordrehmoment oder eine elektrische Abgabeleistung. Entsprechend ist dann zu diesen jeweiligen überwachten Betriebsparametern ein Grenzwert vorgesehen. Vorzugsweise werden wenigstens zwei Betriebsparameter überwacht und mit jeweils einem dazugehörigen Betriebsparametergrenzwert verglichen. Hierdurch ist ein noch sichereres Verfahren zum Betreiben einer Windenergieanlage möglich. Vorzugsweise wird der Abbremsvorgang nur dann eingeleitet, wenn die wenigstens zwei Betriebsparameter jeweils deren dazugehörige Betriebsparametergrenzwerte erreichen. Der Abbremsvorgang wird beispielsweise nur dann eingeleitet, wenn die Drehzahl des Rotors einen Drehzahlgrenzwert überschreitet und außerdem das Rotordrehmoment einen Rotordrehmomentgrenzwert überschreitet.

Vorzugsweise werden die Betriebsparametergrenzwerte wenigstens teilweise voneinander abhängig angepasst. So kann es bei einer Kopplung beispielsweise der Überwachung der Drehzahl des Rotors und des Rotordrehmomentes und Vorsehen des Einleitens des Abbremsvorgangs nur bei Erreichen der beiden hierzu gehörigen Betriebsparametergrenzwerte vorgesehen sein, dass die jeweiligen Grenzwerte etwas höher vorgegeben werden, als diese vorgegeben würden, wenn nur einer der beiden Parameter überwacht würde.

Die Aufgabe wird ferner durch eine Windenergieanlage mit einem Rotor gelöst, der wenigstens ein winkelverstellbares Rotorblatt aufweist, wobei die Windenergieanlage ein Betriebsführungssystem umfasst, wobei ein Sicherheitssystem zum Überwachen wenigstens eines Betriebsparameters vorgesehen ist, wobei das Sicherheitssystem in dem Betriebsführungssystem ein Signal zum Abbremsen des Rotors liefert oder das Abbremsen des Rotors einleitet, sobald der wenigstens eine Betriebsparameter einen Betriebsparametergrenzwert erreicht, die dadurch weitergebildet ist, dass das Betriebsführungssystem wenigstens einen ersten Betriebsmodus und einen zweiten Betriebsmodus vorsieht, wobei der erste Betriebsmodus ein leistungsoptimierter Normalbetrieb ist und der zweite Betriebsmodus ein drehzahlreduzierter und/oder leistungsreduzierter Betriebsmodus außerhalb des leistungsoptimierten Normalbetriebs ist, wobei wenigstens ein Beschleunigungssensor vorgesehen ist, der im ersten Betriebsmodus und/oder zweiten Betriebsmodus eine Rotorbeschleunigung als Betriebsparameter misst, wobei bei Überschreiten eines Rotorbeschleunigungsgrenzwertes das Sicherheitssystem das Signal zum Abbremsen des Rotors liefert oder das Abbremsen des Rotors einleitet.

Vorzugsweise umfasst das Sicherheitssystem eine Sicherheitsüberwachungsvorrichtung und eine Sicherheitskette. Vorzugsweise wird der Betriebsparametergrenzwert im Betrieb angepasst.

Vorzugsweise ist ein Betriebsparameter eine Rotordrehzahl, wobei für den ersten Betriebsmodus ein erstes Drehzahlschaltgerät in dem Sicherheitssystem vorgesehen ist und für den zweiten Betriebsmodus ein zweites Drehzahlschaltgerät in dem Sicherheitssystem vorgesehen ist, wobei wenigstens eines der Drehzahlschaltgeräte bei Überschreiten eines dem jeweiligen Drehzahlschaltgerät zugeordneten Drehzahlgrenzwertes das Abbremssignal liefert.

Vorzugsweise ist eine Rotorblattwinkelverstellrate ein Betriebsparameter. Erfindungsgemäß ist eine Rotorbeschleunigung ein Betriebsparameter.

Wenn vorzugsweise die Rotorblattwinkelverstellrate einen Rotorblattwinkelverstellratengrenzwert und die Rotorbeschleunigung einen Rotorbeschleunigungsgrenzwert erreichen müssen, um das Sicherheitssystem zu veranlassen, ein Abbremssignal bereitzustellen oder das Abbremsen des Rotors einzuleiten, ist eine besonders sichere Windenergieanlage gegeben. Vorzugsweise hängt der Rotorblattwinkelverstellratengrenzwert von dem Rotorbeschleunigungsgrenzwert ab. Es kann auch eine Abhängigkeit des Rotorbeschleunigungsgrenzwertes von dem Rotorblattwinkelverstellratengrenzwert vorzugsweise vorgesehen sein.

Vorzugsweise ist ein Sensor für den Betriebsparameter in dem Sicherheitssystem, insbesondere in einer Sicherheitskette, vorgese-Vorzugsweise ist das Sicherheitssystem von dem Betriebsführungssystem unabhängig, so dass insbesondere kein Eingriff des Betriebsführungssystems in das Sicherheitssystem möglich ist bzw. kein Übergehen des Sicherheitssystems durch das Betriebsführungssystem. Wenn also das Sicherheitssystem ein Abbremssignal generiert bzw. das Abbremsen des Rotors einleitet, ist es dem Betriebsführungssystem nicht möglich, dieses Abbremsen zu unterbinden.

Vorzugsweise ist das Sicherheitssystem oder Teile hiervon in einem Blattwinkelverstellaktuator oder Blattwinkelverstellregler angeordnet.

Vorzugsweise ist eine Steuer- oder Regelvorrichtung einer Windenergieanlage vorgesehen, auf der ein erfindungsgemäßes Verfahren durchführbar ist. Vorzugsweise ist ein Computerprogramm mit Programmcode-Mitteln vorgesehen, die angepasst sind, um das erfindungsgemäße Verfahren auszuführen, wenn das Computerprogramm, insbesondere in einer Steuer- oder Regelvorrichtung, einer Windenergieanlage läuft.

Vorzugsweise ist das bevorzugte Computerprogramm auf einem von einem Computer lesbaren Datenträger gespeichert.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: ein schematisches Blockdiagramm wesentlicher Komponenten einer Windenergieanlage,
- Fig. 3: ein schematisches Schaltbild einer Sicherheitskette,
- Fig. 4: eine schematische Darstellung der Anordnung von Beschleunigungssensoren,
- Fig. 5 a: ein Diagramm einer Rotordrehzahl über der Zeit,

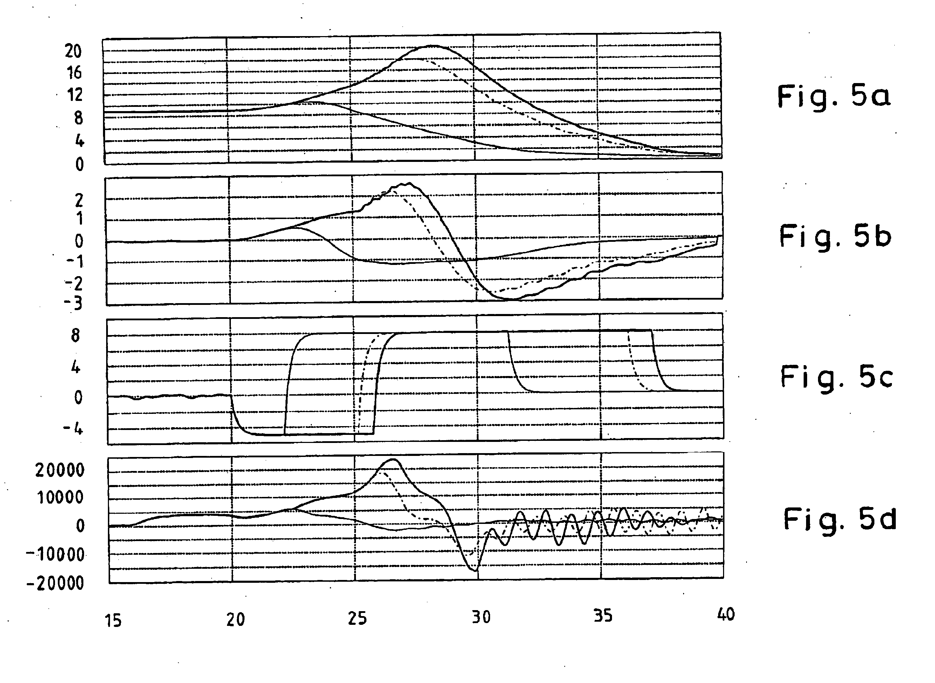

- Fig. 5 b: ein Diagramm einer gefilterten Rotorbeschleunigung über der Zeit,
- Fig. 5 c: ein Diagramm einer Rotorblattwinkelverstellrate über der Zeit,
- Fig. 5 d: eine schematische Darstellung des Blattwurzelbiegemoments über der Zeit aufgetragen,

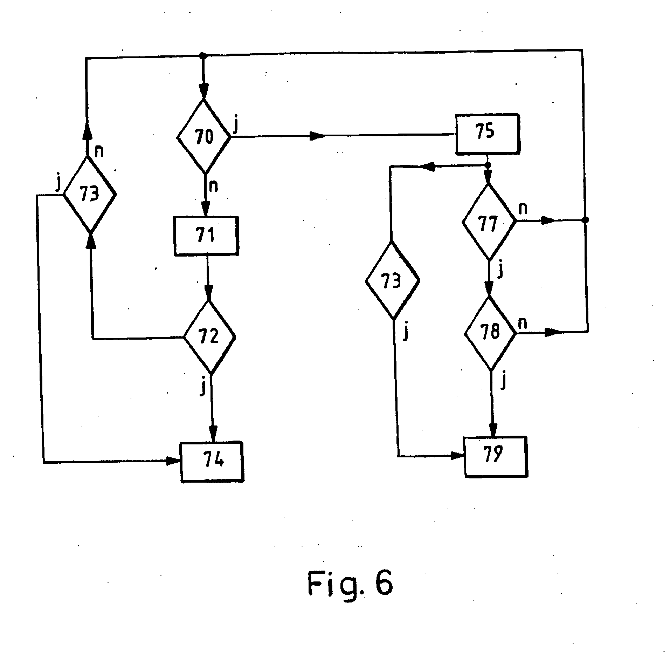

- Fig. 6: einen schematischen Verfahrensablauf eines erfindungsgemäßen Verfahrens zum Betreiben einer Windenergieanlage und

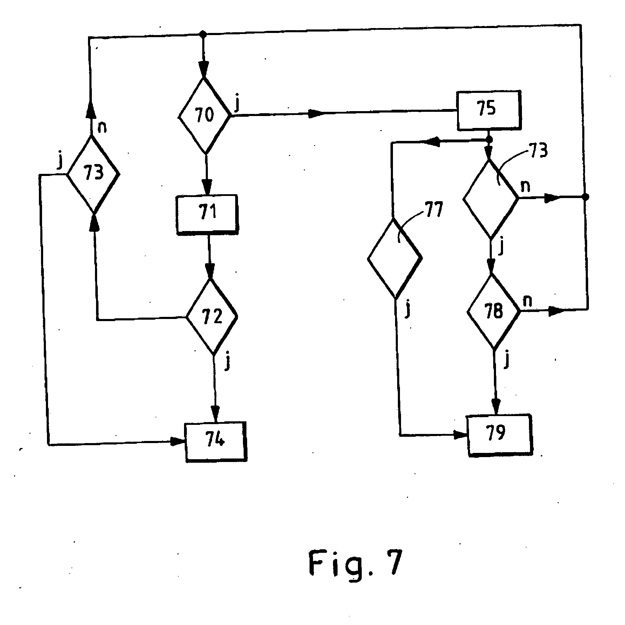

- Fig. 7: einen schematischen Verfahrensablauf eines alternativen erfindungsgemäßen Verfahrens zum Betreiben einer Windenergieanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

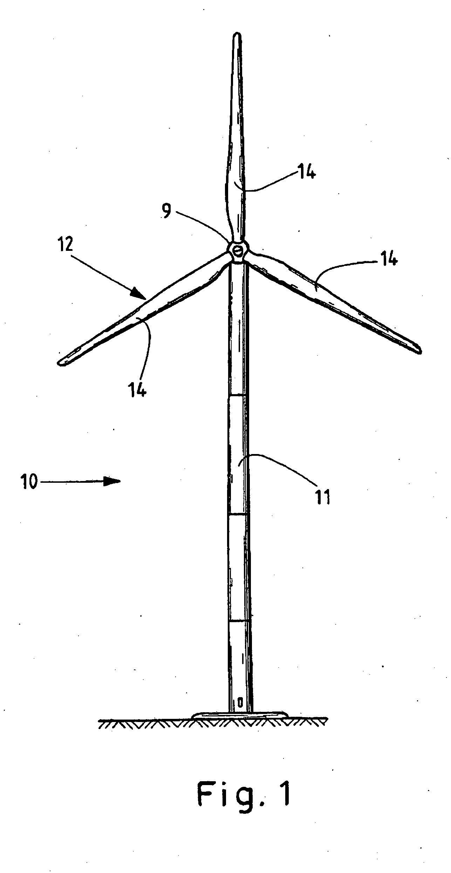

Fig. 1 zeigt eine schematische Darstellung einer Windenergieanlage 10. Die Windenergieanlage 10 weist einen Turm 11 und einen Rotor 12 auf, der drei Rotorblätter 14 umfasst, die auf einer Rotornabe 9 angebracht sind. Bei Windeinfall dreht der Rotor 12 in an sich bekannter Weise. Hierdurch kann Leistung von einem an den Rotor 12 bzw. an die Rotornabe 9 angeschlossenen Generator erzeugt werden und in ein Verbrauchernetz abgegeben werden.

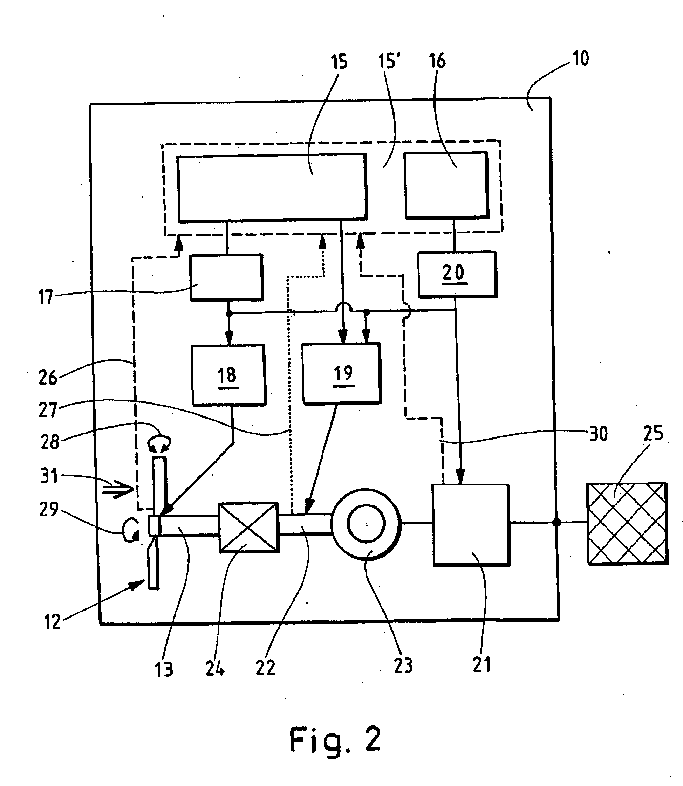

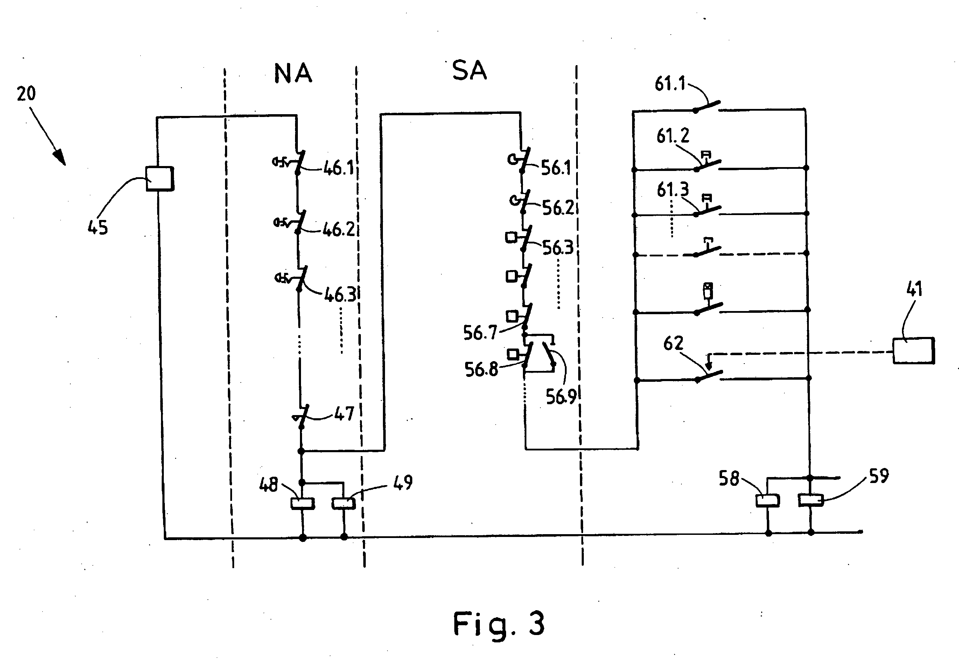

Fig. 2 zeigt schematisch wesentliche Komponenten einer Windenergieanlage 10. Eine Betriebsführung 15, die auch als Betriebsführungseinrichtung oder Betriebsführungssystem bezeichnet werden kann, steuert und/oder regelt den Betrieb der Windenergieanlage 10. An das Betriebsführungssystem 15 schließt sich eine Sicherheitsüberwachungsvorrichtung 16 an, die mit einer Sicherheitskette 20 verbunden ist. Die Sicherheitsüberwachungsvorrichtung 16 kann in Form einer vom Betriebsführungssystem unabhängigen Steuereinheit ausgeführt sein, sie kann auch ganz oder teilweise in einer schon vorhandenen Steuereinrichtung, zum Beispiel einem in der Rotornabe angeordneten Steuerrechner für die Blattwinkelverstellung angeordnet sein. Die Sicherheitskette 20 umfasst beispielsweise einen Vibrationsmelder, einen manuellen (Notaus)-Schalter und ein Drehzahlschaltrelais bzw. einen Drehzahlschalter. Weitere Ausführungen zu der Sicherheitskette werden in Bezug auf die Fig. 3 vorgenommen.

Die Sicherheitskette 20 dient dazu, dass bei Vorliegen eines sicherheitsrelevanten Ereignisses, beispielsweise bei zu großen Vibrationen oder beim Betätigen des Notausschalters durch eine Bedienperson, die Windenergieanlage in einen unkritischen Zustand heruntergefahren wird. Die Sicherheitskette 20 kann als Hardware-Kette ausgestaltet sein. Beim Auslösen der Sicherheitskette 20 wird, was durch den Pfeil zu den elektrischen Komponenten 21 angedeutet ist, der Generator 23 vom Netz 25 genommen und die Rotorwelle 13 bzw. die schnelle Welle 22 abgebremst, beispielsweise über die Blattverstellung 18 bzw. die mechanische Bremse 19 oder auch, was nicht dargestellt ist, unmittelbar unter Umgehung einer oder mehrerer Regel- oder Steuervorrichtungen wie die Blattverstellung 18.

Die Sicherheitsüberwachung 16 kann auch derart ausgestaltet sein, dass diese die Betriebsführung 15 auf Funktionalität überprüft. Die Sicherheitsüberwachung 16 ist insofern als eine Art Watch-Dog vorzugsweise ausgeführt. Das Betriebsführungssystem kann als Betriebsführungssystem mit Sicherheitsüberwachungsvorrichtung 15' ausgestaltet sein. Dieses ist gestrichelt dargestellt. Hierbei beinhaltet das Betriebsführungssystem 15' auch eine integrierte Sicherheitsüberwachung 16 bzw. eine Sicherheitsüberwachungsvorrichtung 16. Das Betriebsführungssystem 15 bzw. 15' ist über entsprechende elektronische Datenleitungen mit einem Regler 17 und der Blattverstellung 18 verbunden und außerdem mit der mechanischen Bremse 19. Unter Blattverstellung 18 wird insbesondere ein Aktuator verstanden, der für eine Winkelverstellung der Rotorblätter 14 sorgt. Entsprechend wird unter mechanischer Bremse 19 ein Aktuator verstanden, der dafür sorgt, dass die mechanische Bremse 19 in diesem Ausführungsbeispiel auf die schnelle Welle 22 wirkt. Die mechanische Bremse oder eine weitere mechanische Bremse 19 kann auf die Rotorwelle 13 wirken, was allerdings nicht dargestellt ist.

Mit 26 ist eine Datenverbindung bezeichnet, die einen Rotorblattwinkel bzw. die Rotorblattwinkel der Rotorblätter 14 dem Betriebsführungssystem 15 bzw. 15' zuführt. Mit der Bezugsziffer 27 ist eine Datenverbindung dargestellt, die eine Ist-Drehzahl der schnellen Welle 22 dem Betriebsführungssystem 15 bzw. 15' zuführt. Mit 30 ist eine Datenleitung bezeichnet, die ein Störsignal, das in diesem Ausführungsbeispiel von elektrischen Komponenten 21 ausgeht, dem Betriebsführungssystem 15 bzw. 15' zuführt.

Der Betrieb der Windenergieanlage 10 ist wie folgt. Durch Einfall von Wind 31 wird der Rotor 12 gemäß der Rotationsrichtung 29 gedreht. Hierdurch dreht sich auch die Rotorwelle 13, die mit einem Getriebe 24 in einer Übersetzung von beispielsweise 1 : 100 die schnelle Welle 22 dreht. Hierdurch wird im Generator 23 eine elektrische Spannung generiert, die in den elektrischen Komponenten 21 geregelt, umgerichtet und/oder in eine Wechselspannung umgewandelt wird. Am Ausgang der elektrischen Komponenten 21 ist eine Verbindung zum Netz 25 vorgesehen, mit dem die Verbraucher mit Spannung bzw. elektrischer Leistung versorgt werden. Allgemein bekannte Regelungs- und Führungskonzepte von Windkraftanlagen sind beispielsweise in Kapitel 5 des Lehrbuchs "Windkraftanlagen Systemauslegung, Netzintegration und Regelung" von Siegfried Heier, 4. Auflage Februar 2005, B. G. Teubner-Verlag /GWV Fachverlage GmbH, Wiesbaden, offenbart.

Die Sicherheitskette 20 ist in Fig. 3 schematisch dargestellt. Zunächst dient eine Spannungsversorgung 45 dazu, die entsprechenden Komponenten der Sicherheitskette 20 mit Spannung zu versorgen. Die Sicherheitskette 20 umfasst eine Notausschalteinrichtung NA und eine Sicherausschalteinrichtung SA. Die Notausschalteinrichtung NA umfasst mehrere Notausschalter 46.1, 46.2 und 46.3, die von Bedienpersonen bedient werden können, falls eine Notausschaltung notwendig ist. Diese Notausschalter sind in Reihe geschaltete manuelle Schalter, die als Notaustaste an einer Topbox, an einer Bodenbox, im Turmfuß und am Umrichterschrank sowie an anderen Stellen an und in der Windenergieanlage angeordnet sind.

Darüber hinaus ist ein weiterer Schlüsselschalter 47 in Reihe zu den anderen manuell betätigbaren Schaltern 46.1 bis 46.3 vorgesehen, der mittels eines entsprechenden Schlüssels vom Wartungspersonal betätigt wird. Ein derartiger, auch Serviceschalter genannter, Schlüsselschalter 47 ist beispielsweise in der Topbox (Steuerschrank in der Gondel) zur Wartung der Blattverstelleinrichtung vorgesehen.

Durch die Notausschalteinrichtung NA werden alle spannungsführenden Teile sowie alle drehenden Teile der Windenergieanlage 10 zum Halten gebracht. Die spannungsführenden Teile werden bei Betätigen der Notausschalteinrichtung NA soweit möglich spannungslos geschaltet. Durch das Betätigen eines der Schalter 46.1, 46.2, 46.3, ..., 47 werden die Schalter geöffnet, so dass eine Sicherheitsabschaltung der Windenergieanlage 10 erfolgt. Durch dieses "Notaus" werden die angeschlossenen Relais 48, 49 geöffnet (Fail-safe-Anordnung).

Bei Unterbrechung der Schleife fallen die selbsthaltenden Relais 48, 49 ab, so dass eine Sicherheitsabschaltung erfolgt. Hierbei steuern beispielsweise die Relais 48, 49 die Bremsen der Windenergieanlage an und lösen zum Beispiel ein Bremsprogramm aus.

Ferner sind in Reihe zu den manuell betätigbaren Schaltern 46.1, 46.2, 46.3, ..., 47 weitere Schalter 56.1, 56.2, 56.3, ... einer Sicherheitsausschalteinrichtung SA vorgesehen, wobei die Schalter der Sicherausschalteinrichtung SA mittels Sensoren geschaltet werden. Mittels der Sensoren für die Schalter 56.1, 56.2, 56.3, ... werden bewegliche Teile oder dergleichen in der Maschine überwacht. Beispielsweise wird mittels zweier Sensoren die Kabelverdrillung (im Uhrzeigersinn und entgegen dem Uhrzeigersinn) überwacht. Darüber hinaus findet eine ständige Überprüfung der Vibration, der (Über-)Drehzahl des Rotors sowie des Getriebes sowie eine Überwachung des Betriebsführungssystems (Watch-Dog) statt.

Zur Überwachung der Drehzahl des Rotors 20 im Normalbetrieb, d.h. in einem Betrieb auf einer Kennlinie, die einen leistungsoptimierten Betrieb vorsieht, ist ein erster Drehzahlschalter 56.7 vorgesehen, der beispielsweise eine Abschaltung bzw. Ausschaltung dann vorsieht, wenn die Drehzahl einen Grenzwert überschreitet, die typischerweise im Bereich von 20 % oberhalb der Nenndrehzahl liegt. Zusätzlich ist nun gemäß der Erfindung noch ein zweiter Drehzahlschalter 56.8 in Reihe zu dem ersten Drehzahlschalter 56.7 vorgesehen, der bei dem Überschreiten einer zweiten Drehzahlgrenze auslöst. Die zweite Drehzahlgrenze ist gemäß der Erfindung unterhalb der ersten Drehzahlgrenze angeordnet, beispielsweise vorzugsweise im Bereich zwischen 5 und 10 % oberhalb der Nenndrehzahl.

Sofern die Windenergieanlage in einem leistungsoptimierten Betriebsmodus, also im Normalbetrieb, ist, wird der zweite Drehzahlschalter 56.8 durch einen Überbrückungsschalter 56.9 kurzgeschlossen. Erst in einem weiteren Betriebsmodus, der unterschiedlich zu dem leistungsoptimierten Betriebsmodus ist, wird das Kurzschalten durch den Überbrückungsschalter 56.9 beendet.

Der zweite Drehzahlschalter 56.8 und gegebenenfalls der Überbrückungsschalter 56.9 können in der Nabe 9 angeordnet sein. Zweckmäßigerweise sind dann auch der Regler 17 und die Blattverstellung 18 in der Nabe angeordnet. Ein Signal, dass der erste Betriebsmodus vorherrscht, wird dann von der Betriebsführung 15, 15' bzw. der Sicherheitsüberwachungsvorrichtung 16 über einen Schleifring oder per Funk an den zweiten Drehzahlschalter 56.8 weitergegeben, so dass der zweite Drehzahlschalter 56.8 inaktiv ist.

Erst bei Unterbrechung des Signals wird der Drehzahlschalter 56.8 aktiv geschaltet, so dass unmittelbar bei Überschreiten des zweiten Drehzahlgrenzwertes der Regler bzw. die Steuerung 17 für die Rotorblattwinkelverstellung und/oder die Blattverstellung bzw. ein Aktuator für die Blattverstellung angesprochen werden kann und eine Verstellung der Rotorblätter in Richtung Fahnenstellung erfolgen kann. Das Signal fehlt vorzugsweise so lange, wie der zweite Betriebsmodus vorherrscht. Damit ist eine Fail-safe-Anordnung gegeben. Die Gefahr, dass durch einen Fehler in der Betriebsführung der Drehzahlschalter 56.8 deaktiviert wird, obwohl nicht ordnungsgemäß in den Normalbetrieb umgeschaltet wird, kann durch zeitverzögertes Umschalten des Drehzahlschalters 56.8 vermieden werden. Sollte es durch Fehler im Betriebsführungssystem 15, 15' bzw. in der Sicherheitsüberwachungsvorrichtung 16 zu einem Störfall kommen, tritt die kritische Situation nach einigen wenigen Sekunden ein. Wird demgemäß die Deaktivierung grundsätzlich um beispielsweise 15-30 sec verzögert, was durch die Betriebsführung berücksichtigt wird, kann ein solcher Fehler sicher abgefangen werden. Die Aktivierung des Drehzahlschalters 56.8 erfolgt unverzögert.

In Reihe zu den Schaltern 46.1, 46.2, 46.3, ..., 47 und den weiteren Schalter 56.1, 56.2, 56.3, ... , 46.7, 46.8 sind das Selbsthalterelais 61.1 sowie verschiedene Reset-Schalter 61.2, 61.3, ... parallel zueinander geschaltet, um nach einer Sicherheitsabschaltung durch die Notausschalteinrichtung NA oder die Sicherheitsausschalteinrichtung SA die Wiederinbetriebnahme der Windenergieanlage zu ermöglichen. Hierzu sind verschiedene Reset-Schalter 61.2, 61.3,
... vorgesehen. Die Reset-Schalter 61.2, 61.3, ... können sowohl als mechanisch betätigbare Schalter an den entsprechenden Stellen beispielsweise in einer Topbox oder in einer Bodenbox ausgebildet sein.

Darüber hinaus gibt es auch einen Reset-Schalter für eine Netzwiederkehr. Während des ordnungsgemäßen Betriebs der Windenergieanlage ist der Selbsthaltungsschalter bzw. das Selbsthalterelais 61.1 geschlossen. Fig. 3 zeigt die Sicherheitskette 20 im stromlosen Zustand. Außerdem ist ein Reset-Schalter 62 vorgesehen, der mittels einer in Fig. 3 eingezeichneten Bedieneinrichtung 41 einer Fernüberwachungszentrale aus der Ferne geschaltet wird. Durch Betätigen der sensorgeschalteten Schalter 56.1, 56.2, 56.3, 56.7 bzw. 56.8 wird eine Sicherheitsabschaltung ausgeführt, indem die Relais 58, 59 abfallen, so dass die Windenergieanlage in einen sicheren Betrieb geführt werden kann. Es werden dann entsprechende Bremsprogramme für die Teile der Windenergieanlage 10 ausgeführt.

Erfindungsgemäß wird die Rotorbeschleunigung überwacht. Ein Abschaltkriterium bzw. ein Auslösen des Abbremsens des Rotors kann bei einer 5 MW-Windenergieanlage mit einem Rotordurchmesser von 126 m beispielsweise eine Rotorbeschleunigung sein, die einen Grenzwert von 0,6 rpm/s aufweist. Bevorzugt ist es, wenn eine kombinierte Überwachung der Rotorbeschleunigung und der Rotorblattwinkelverstellrate vorgesehen ist, beispielsweise einen Rotorbeschleunigungsgrenzwert von 0,45 rpm/s, einen Grenzwert für die Rotorblattwinkelverstellrate von - 1°/s. Sofern ein Rotorblatt nicht mehr verdreht werden kann, kann ein sicheres Kriterium auch dadurch erzeugt werden, dass der Grenzwert der Rotorbeschleunigung bei 0,6 rpm/s liegt und der Grenzwert der Rotorblattwinkelverstellrate bei 0°/s liegt. Somit ist im Vergleich zum o.g. Beispiel des Beschleunigungsgrenzwertes von 0,45 rpm/s bei einem Verstellratengrenzwert von -1°/s eine Anpassung des Beschleunigungsgrenzwertes auf 0,6 rpm/s erfolgt, um somit den gewünschten Grenzwert der Rotorblattwinkelverstellrate von 0°/s zur Überwachung eines blockierten Blattverstellantriebs zu realisieren. Das Sicherheitsniveau zur Absicherung unzulässiger Störfälle durch Rotorüberdrehzahl ist dabei etwa gleich geblieben und kann nur durch übliche Simulationsrechnungen ermittelt werden.

Es ist auch möglich, alleine die Rotorbeschleunigung zu überwachen.

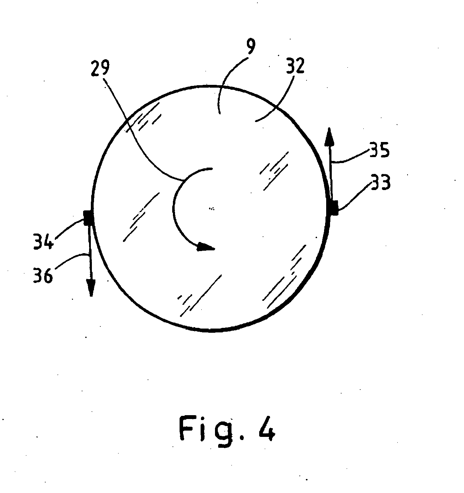

Die Rotorbeschleunigung kann beispielsweise über Beschleunigungssensoren ermittelt werden oder aus einem Drehzahlsignal oder Rotorpositionssignalen rechnerisch bestimmt werden. Zur Rotorbeschleunigungsermittlung kann, wie in Fig. 4 gezeigt ist, beispielsweise die Anordnung von zwei Beschleunigungssensoren 33, 34 auf einer Rotorwelle 32 vorgesehen sein. Anstelle der Anordnung auf der Rotorwelle 32 können auch die Sensoren 33 und 34 auf der Nabe angeordnet sein. Zum Messen der Rotorbeschleunigung 35 bzw. 36 kann die tangentiale Beschleunigung auch am Blattanschluss gemessen werden. Diese kann durch Division durch den Radius in eine Winkelbeschleunigung umgerechnet werden. Um die Erdbeschleunigung und Turmkopfbeschleunigungen beispielsweise Querbeschleunigungen, Nicken, Rollen und Torsion durch die Messung auszuschalten, ist es bevorzugt, zwei Beschleunigungssensoren 33 und 34 um 180° versetzt anzuordnen. Eine Addition der beiden Signale neutralisiert unerwünschte Beschleunigungsanteile. Für einen Triggerwert bzw. Grenzwert von 0,45 rpm/s ergibt sich bei einem Rotorradius von 1,6 m eine entsprechende Tangentialbeschleunigung von 0,075 m/s². In diesem Fall ist ein Messbereich von ca. ± 15 m/s² vorgesehen. Die gemessene Rotorbeschleunigung wird vorzugsweise gefiltert. Hierdurch können unnötige Abschaltungen bzw. Bremsvorgänge des Rotors vermieden werden. Die Filterung ist vorzugsweise ein Filter mit einem Tiefpass mit einem PT₁-Glied mit einer Zeitkonstanten von 1 s.

Insbesondere im schallreduzierten Betrieb, also in einem Betriebsmodus mit reduzierter Drehzahl kann die Erfindung besonders gut eingesetzt werden. Die Figuren 5a bis 5d zeigen Diagramme verschiedener Parameter einer Windenergieanlage über der Zeit aufgetragen. Dargestellt ist das Verhalten der Windenergieanlage im drehzahlreduzierten Betrieb beim Auftreten eines Störfalls. Die Zeit ist in Sekunden aufgetragen. In den Figuren sind jeweils drei Kurven dargestellt. Die dick gezeichnete Kurve ist der jeweilige Verlauf des Betriebsparameters mit einer Betriebsführung und einer Sicherheitsüberwachungsvorrichtung, wie sie im Stand der Technik bekannt ist. Die dünn gezeichnete Linie stellt einen Betriebsmodus mit einer zweiten Sicherheitsüberwachungsvorrichtung dar, bei der die Rotorbeschleunigung und die Rotorblattwinkelverstellrate überwacht werden und bei Erreichen der beiden hiermit verbundenen Grenzwerte ein Abbremsvorgang eingeleitet wird. Die strichpunktierte Linie stellt einen Betriebsmodus mit einer Sicherheitsüberwachungsvorrichtung dar, bei dem die Drehzahl überwacht wird und ein Abbremsen des Rotors eingeleitet wird, wenn ein reduzierter Drehzahlgrenzwert erreicht ist. Die Ausführungsbeispiele der Fig. 5 sind alle in einem drehzahlreduzierten Betriebsmodus.

Fig. 5a zeigt die entsprechenden drei Diagramme einer Funktion der Rotordrehzahl von der Zeit. Es ist zu sehen, dass beim drehzahlreduzierten Betrieb die Rotordrehzahl in dem vorgesehenen Lastfall, zunächst konstant auf die reduzierte Drehzahlvorgabe geregelt wird, und dann, beispielsweise bei einem Störfall, der bei 20 s auftritt und eine störfallbedingte maximale Rotorblattwinkelverstellrate beinhaltet, die negativ ist, also zu einem Winkel von 0° hin (siehe Fig. 5c) zunimmt. Es ist zu erkennen, dass dann die Rotordrehzahl sich erhöht und ein Maximum bei ungefähr 20 Umdrehungen pro Minute (rpm) erreicht, und zwar nach ungefähr 8 s nach dem Lastfall. In diesem Fall ist der Rotordrehzahlgrenzwert im Normalbetrieb erreicht und ein Abbremsvorgang wird eingeleitet, so dass die Rotordrehzahl reduziert wird. Dieses geschieht durch Verstellen des Rotorblattwinkels, wie in Fig. 5c erkennbar ist.

Bei der Überwachung der Rotorbeschleunigung gekoppelt mit der Überwachung der Rotorblattwinkelverstellrate, beispielsweise mit den Grenzwerten einer Rotorbeschleunigung von 0,45 rpm/s und einem Grenzwert für die Rotorblattwinkelverstellrate von -1°/s ergibt sich, dass die maximal erreichte Rotordrehzahl ungefähr 10,5 rpm ist. Das Abbremsen geschieht in diesem Fall deutlich früher. Etwas später geschieht das Abbremsen dann, wenn ein zweiter Drehzahlgrenzwert vorgesehen ist, der unter dem ersten Drehzahlgrenzwert liegt, nämlich beispielsweise bei ungefähr 18 rpm an der Nabe. In diesem Fall wird nach Erreichen dieses Grenzwerts ein Abbremsen eingeleitet. Dieses geschieht bei ca. 25 Sekunden in den Figuren 5a, 5b und 5c.

In Fig. 5b ist eine mit einem PT₁-Glied und einer Zeitkonstante von einer Sekunde gefilterte Rotorbeschleunigung über der Zeit aufgetragen, die sich für den entsprechenden Lastfall ergibt. Auch hier ist zu erkennen, dass im Betrieb nach dem Stand der Technik die Rotorbeschleunigung, die in rpm/s aufgetragen ist, relativ groß wird. Die Zunahme der Rotorbeschleunigung ist bei entsprechender Überwachung der Rotorbeschleunigung und der Rotorblattwinkelverstellrate (dünne Linie) deutlich weniger stark ausgeprägt. Bei der strichpunktierten Linie, nämlich bei Vorsehen einer niedrigeren Drehzahlgrenze, wird der Rotor weniger als bei einer bekannten Betriebsführung beschleunigt.

In Fig. 5c ist die entsprechende Rotorblattwinkelverstellrate in °/s aufgetragen. Es ist zu erkennen, dass das Abbremsen des Rotors durch Verstellen der Pitchrate (Rotorblattwinkelverstellrate) vorgenommen wird. Die Pitchrate wird nach Erreichen der entsprechenden Grenzwerte auf 8°/s eingestellt, um den Rotor abzubremsen. Im Betrieb gemäß einer bekannten Betriebsführung geschieht dieses nach ca. 7 s ab Beginn des Störfalls bei 20 s.

Die schnellste Einleitung des Bremsvorganges wird bei der dünnen Linie erreicht.

In Fig. 5d ist schematisch das Blattwurzelbiegemoment in kNm für die entsprechende Sicherheitsüberwachungsvorrichtung aufgezeichnet. Es ist deutlich zu erkennen, dass mit den erfindungsgemäßen Verfahren zum Betreiben der jeweiligen Windenergieanlage deutlich geringere Belastungen der Windenergieanlage vorherrschen.

Für die Überwachung eines reduzierten Drehzahlniveaus in einem entsprechenden zweiten Betriebsmodus mit wenigstens einem zweiten zuschaltbaren Drehzahlschaltgerät 56.8 wäre ein für eine 5 MW-Anlage geeigneter Grenzwert beispielsweise 1.170 rpm generatorseitig, welches der Nenndrehzahl im Normalbetrieb entspricht. Der erste Drehzahlgrenzwert im Normalbetrieb beträgt dann beispielsweise 1.250 rpm. Mit dem reduzierten zweiten Grenzwert von 1.170 rpm könnte ein drehzahlreduzierter Betriebsmodus von Drehzahlen zwischen 870 bis 1.100 rpm sicher überwacht werden.

Die entsprechenden Parameter sind von Auslegungsdaten der Windenergieanlage abhängig und können für jede Anlage bestimmt bzw. angepasst werden. Dieses kann durch aeroelastische Simulationsrechnungen erfolgen. Haupteinflussfaktoren sind hierbei der Rotordurchmesser, die Aerodynamik des Rotors, die Drehträgheit von Rotor und Triebstrang, Eigenschaften des Blattverstellungssystems und Qualität der Sensorsignale.

Der zweite Drehzahlgrenzwert im Betriebsmodus außerhalb bzw. unterhalb des leistungsoptimierten Normalbetriebs sollte vorzugsweise etwa 5 bis 9 % bzw. bevorzugt 6 bis 7 % oberhalb der reduzierten Drehzahlvorgabe liegen. Bei üblichen Drehzahlreduzierungen aus Schallgründen kann dies dazu führen, dass der zweite Drehzahlgrenzwert recht genau im Bereich der Nenndrehzahl im leistungsoptimierten Normalbetrieb liegt. Bei reduzierten Drehzahlvorgaben im drehzahlreduzierten Betrieb, die deutlich unterhalb der Nenndrehzahl im leistungsoptimierten Betrieb liegen, können die Drehzahlgrenzwerte - bezogen auf die reduzierte Drehzahlvorgabe auch deutlich im Verhältnis zur reduzierten Drehzahlvorgabe erhöht werden. So können Drehzahlgrenzwerte im drehzahlreduzierten Betrieb, beispielsweise bei 30 bis 40 % oberhalb dieser reduzierten Drehzahlvorgabe liegen, sofern die reduzierte Drehzahlvorgabe z.B. bei nur 75 % der Nenndrehzahl im leistungsoptimierten Normalbetrieb liegt, d.h. bezogen auf die Nenndrehzahl im leistungsoptimierten Betrieb liegen die Drehzahlgrenzwerte dann knapp unterhalb oder knapp oberhalb dieser Nenndrehzahl.

Erfindungsgemäß kann die Sicherheitskette durch weitere Überwachungsfunktionen ergänzt werden. Die Überwachungsfunktionen können in einem Pitchcontroller bzw. einer Blattwinkelsteuer- bzw. -regeleinrichtung in der Nabe integriert sein. Zusätzlich kann eine unabhängige Überwachungseinheit vorgesehen sein, die direkten Zugriff auf den Rotorblattwinkelverstellaktuator hat.

Es könnte hardwaremäßig ein zusätzliches Rotorbeschleunigungsschaltgerät in die Sicherheitskette aufgenommen werden. Dieses Rotorbeschleunigungsschaltgerät nimmt eine, insbesondere gefilterte, Rotorbeschleunigung aus dem Drehzahlsignal auf. Eine Auswertung kann über ein Initiatorblech oder einen Inkrementalwertgeber geschehen.

Es kann auch ein Drehzahlschaltgerät in der Sicherheitskette aufgenommen sein, das durch einen Statusflag (Statussignal) aktiviert wird. Dieses ist im Wesentlichen schon in Fig. 3 angedeutet. Außerdem kann es ermöglicht sein, dass eine Steuer- oder Regelvorrichtung selbstständig einen drehzahlvariablen Betriebsmodus bzw. drehzahlreduzierten Betriebsmodus bzw. einen Betriebsmodus, der im Hinblick auf einen leistungsoptimierten Normalbetrieb reduziert ist, erkennt. Hierzu können in der Nabe zwei Drehzahlschaltgeräte vorgesehen sein, von denen eines als eine Art Öffner und eines als Schließer ausgebildet ist. Der Schließer ist hierbei beispielsweise mit einer relativ langen Mittelungszeit auf eine Drehzahl unterhalb der Nenndrehzahl eingestellt und schaltet somit bei generell niedrigem Drehzahlniveau das als Öffner arbeitende Drehzahlschaltgerät auf aktiv bzw. brückt dieses Drehzahlschaltgerät durch Schließen bei länger anhaltendem hohem Drehzahlniveau.

Es kann auch eine Überwachung von Betriebsparametern im Regler 17 der Fig. 2 vorgesehen sein. Dieser Regler 17 bzw. Pitchcontroller kann als unabhängiges System zur Überwachung verwendet werden und erlaubt einen direkten Zugriff auf den oder die Rotorblattwinkelverstellaktuatoren 18 der Fig. 2.

Anstelle der zwei Sensoren aus Fig. 4 können auch, insbesondere redundant, vier Sensoren oder ungerade Sensorzahlen verwendet werden, die entsprechende Signale erzeugen, die dann zur Berechnung der tangentialen Beschleunigung des Rotors dienen. Es könnte auch nur ein Sensor verwendet werden, sofern dann der Einfluss der Gravitation bei umlaufender Nabe rechnerisch entlang der Rotorposition korrigiert wird und aus dem Schwingungsverhalten der Anlage reduzierende Störbeschleunigungen abgerechnet werden.

Eine Erfassung der Rotorbeschleunigung anhand von Sensoren an oder in der Nabe ist vorteilhaft, da dieses eine von der Anlagensteuerung unabhängige Überwachung ermöglicht.

Außerdem kann eine zusätzliche Drehzahlüberwachung bzw. ein zusätzliches Drehzahlschaltgerät in der Rotornabe vorgesehen sein. Hierzu wird ein Drehzahlsollwert als Signal an den Regler 17, der ein Rotorblattwinkelverstellregler bzw. eine entsprechende Steuerungsvorrichtung ist, übermittelt werden. In dem Regler 17 kann auch ein Drehzahlistwert für die Drehzahlüberwachung ermittelt werden.

Bei der Erfindung ist von Vorteil, dass bei beliebiger Drehzahlvorgabe auch der zulässige Grenzwert angepasst werden kann, z.B. als prozentuale Vorgabe, beispielsweise, dass der Grenzwert 125 % der Solldrehzahl in diesem Betriebsmodus ist. Es können auch mehrere vorgegebene Grenzwertstufen vorgesehen sein. Hierzu kann vorzugsweise auch eine Plausibilitätsüberwachung des Drehzahlsollwertes, der übermittelt wird, vorgesehen sein. Wenn keine oder unplausible Drehzahlsollwerte übermittelt werden, wird ein Bremsmanöver eingeleitet. Die Plausibilität kann über eine maximale zulässige Abweichung zwischen Soll- und Istwert, eine maximale Obergrenze des Sollwertes und eine maximale zulässige Beschleunigung bzw. Änderungsrate des Sollwertes überwacht werden. Die entsprechenden gemessenen Werte sind zu filtern oder zu mitteln, um einzelne falsche Signale auszuschalten. Beispielsweise kann, um eine zu große Zeitverzögerung zu verhindern, vorgesehen sein, dass als Filterung einer der Grenzwerte in nur zwei aufeinander folgenden Drehzahlsignalen überschritten sein muss.

Die Aktivierung der Überwachung kann auch durch einen von der Steuerung oder Regelung bzw. der Betriebsführung oder des Sicherheitssystems über einen Schleifring übermittelten Statusflag (Statussignal), der aktiv ist, wenn kein Signal anliegt (Fail-safe-Anordnung), vorgesehen sein.

Der zweite Drehzahlschalter 56.9 aus Fig. 3 kann vorzugsweise mit einer einseitigen Zeitverzögerung deaktiviert werden, beispielsweise mit einer Zeitverzögerung von 30 s. Ein entsprechendes Drehzahlschaltgerät kann auch in der Nabe angeordnet sein.

Es kann ferner ein externes Vorgabemodul vorgesehen sein, mit dem Drehzahlvorgaben zur Verfügung gestellt werden. Dieses externe Vorgabemodul kann dann beispielsweise einen Statusflag oder ein Statussignal an den Regler 17 senden. Hierdurch wird das Risiko reduziert, dass der Regler 17 eine Drehzahlreduzierung vornimmt, ohne dass der Statusflag gesetzt wurde. Es kann dann auch die interne Drehzahlvorgabe zusätzlich überwacht werden.

In Fig. 6 ist ein schematisches Blockdiagramm des Verfahrensablaufs des Betriebs einer Windenergieanlage dargestellt. In dem Beispiel der Fig. 6 wird bei 70 abgefragt, ob ein Signal für den zweiten Betriebsmodus vorhanden ist. Es kann sich hierbei um den Statusflag, der vorstehend beschrieben wurde, handeln. Ein entsprechendes Signal kann beispielsweise generiert werden, wenn erkannt wird, dass das Netz 25 nur eine reduzierte Leistung aufnehmen kann. Ein entsprechendes Signal kann auch generiert werden, wenn beispielsweise ein drehzahlreduzierter Betrieb notwendig ist, um Lärmbelästigungen, beispielsweise in der Nacht, zu vermeiden. Wird diese Frage mit "nein" beantwortet, was durch n in Fig. 6 dargestellt wird, ist klar, dass sich die Windenergieanlage im leistungsoptimierten Normalbetrieb bei 71 befindet.

Als Nächstes wird abgefragt, ob die aktuelle Drehzahl größer einem ersten Drehzahlgrenzwert ist. Dieses geschieht bei 72. Sofern dieses verneint wird, wiederholt sich die vorstehende Abfrage bei 80. Bei Bejahung der Abfrage, ob die Drehzahl größer als der erste Drehzahlgrenzwert ist, was mit j in Fig. 6 dargestellt ist, wird bei 74 der Abbremsvorgang eingeleitet. Dieses kann durch Betätigen einer mechanischen Bremse oder Verstellen des Rotorblattwinkels zu höheren Winkeln in Richtung Fahnenstellung geschehen.

Bevor die Rekursion des Verfahrens von 72 zu 70 geschieht, wird in 73 noch abgefragt, ob die Rotorbeschleunigung größer als ein Rotorbeschleunigungsgrenzwert ist. Wenn dieses verneint wird, geht die Verfahrensführung bei 70 weiter. Sofern dieses bejaht wird, wird ein Bremsvorgang eingeleitet. Wenn bei 70 die Frage, ob ein Signal für den zweiten Betriebsmodus vorhanden ist, mit ja beantwortet wird, geht die Verfahrensführung bei 75 weiter, nämlich beim zweiten Betriebsmodus, der beispielsweise ein drehzahlreduzierter Betriebsmodus sein kann, um beispielsweise Schallreduktion zu erreichen.

Als Nächstes wird dann bei 77 überprüft, ob die aktuelle Drehzahl größer als ein zweiter Drehzahlgrenzwert ist, der niedriger als der erste Drehzahlgrenzwert ist. Sofern dieses bejaht wird, wird bei 78 abgefragt, ob eine Rotorblattwinkelverstellrate kleiner als ein Grenzwert einer Rotorblattwinkelverstellrate ist. Sofern dieses bejaht wird, wird bei 79 ein Abbremsvorgang eingeleitet.

Sofern die vorherige Frage verneint wird, beginnt das Verfahren bei 70 erneut. Entsprechend beginnt das Verfahren auch bei 70 erneut, sofern die Frage bei 77 verneint wird.

Erfindungsgemäß kann anstelle der UND-Verknüpfung der Abfragen bei 77 und 78 auch ausschließlich die Abfrage bei 77 geschehen, so dass die Abfrage bei 78 wegfällt. Entsprechend kann auch, wie in Fig. 6 dargestellt ist, parallel zu den Abfragen 77 und 78 die Abfrage bei 73 vorgenommen werden, ob die Rotorbeschleunigung größer einem Rotorbeschleunigungsgrenzwert ist. Bei Beantwortung mit ja wird der Abbremsvorgang unabhängig von der Beantwortung bei 77 und 78 eingeleitet. Bei Verneinung dieser Abfrage bei 73 werden die Abfragen 77 und 78 unabhängig hiervon auch durchgeführt.

Fig. 7 stellt einen schematischen Verfahrensablauf eines erfindungsgemäßen Verfahrens zum Betreiben einer Windenergieanlage in einer zu der im Verfahrensablauf gemäß Fig. 6 alternativen Ausführungsform dar. In diesem Fall sind die Abfragen bei 77 und 73 im Vergleich zu Fig. 6 vertauscht. Damit wird nach der Abfrage bei 70, ob ein Signal für den zweiten Betriebsmodus vorhanden ist und dieses bejaht wird, das Verfahren zu 75 in dem zweiten Betriebsmodus geführt, beispielsweise einem drehzahlreduzierten Betriebsmodus.

Es werden dann parallel die folgenden Abfragen durchgeführt, nämlich bei 77, ob die Drehzahl größer als der zweite Drehzahlgrenzwert ist. Sofern dieses bejaht wird, geschieht bei 79 ein Abbremsen. Die andere Variante der Abfrage gemäß Fig. 7 im zweiten Betriebsmodus 75 geschieht zunächst so, dass bei 73 geprüft wird, ob die Rotorbeschleunigung größer als der Rotorbeschleunigungsgrenzwert ist. Wenn dieses verneint wird, wird bei 70 wieder eine Abfrage durchgeführt, ob ein Signal für den zweiten Betriebsmodus vorhanden ist. Sollte die Abfrage bei 73 allerdings bejaht werden, wird bei 78 abgefragt, ob die Blattwinkelverstellrate kleiner als der Blattwinkelverstellratengrenzwert ist. Bei Bejahung dieser Abfrage geschieht ein Abbremsen bei 79. Damit steckt im zweiten Betriebsmodus die folgende Logik hinter der Betriebsführung, nämlich dass ein Abbremsen geschieht, wenn der zweite Drehzahlgrenzwert überschritten ist ODER der Rotorbeschleunigungsgrenzwert überschritten ist UND der Rotorblattwinkelverstellratengrenzwert überschritten ist.

### Bezugszeichenliste

- 9: Rotornabe
- 10: Windenergieanlage
- 11: Turm
- 12: Rotor
- 13: Rotorwelle
- 14: Rotorblatt
- 15: Betriebsführungssystem
- 15': Betriebsführungssystem mit Sicherheitsüberwachungsvorrichtung
- 16: Sicherheitsüberwachungsvorrichtung
- 17: Regler
- 18: Blattverstellung
- 19: mechanische Bremse
- 20: Sicherheitskette
- 21: elektrische Komponenten
- 22: schnelle Welle
- 23: Generator (mit Läufer und Stator)
- 24: Getriebe
- 25: Netz
- 26: Datenverbindung
- 27: Datenverbindung
- 28: Winkelverstellung
- 29: Rotationsrichtung
- 30: Störsignal
- 31: Wind
- 32: Rotorwelle
- 33: Beschleunigungssensor
- 34: Beschleunigungssensor
- 35: Beschleunigung
- 36: Beschleunigung
- 41: Bedieneinrichtung
- 45: Spannungsversorgung
- 46.1, 46.2, 46.3: Notausschalter
- 47: Schlüsselschalter
- 48: Relais (Notaus)
- 49: Relais (Notaus)
- 56.1, 56.2, 56.3: Sensorschalter
- 56.7: erster Drehzahlschalter
- 56.8: zweiter Drehzahlschalter
- 56.9: Überbrückungsschalter
- 58: Relais (Sicheraus)
- 59: Relais (Sicheraus)
- 61.1: Selbsthaltungsschalter
- 61.2, 61.3: Reset-Schalter
- 62: Reset-Schalter
- 70: Signal für zweiten Betriebsmodus vorhanden?
- 71: leistungsoptimierter Normalbetrieb
- 72: Drehzahl größer erster Drehzahlgrenzwert?
- 73: Rotorbeschleunigung größer Rotorbeschleunigungsgrenzwert?
- 74: Abbremsen
- 75: zweiter Betriebsmodus
- 77: Drehzahl größer zweiter Drehzahlgrenzwert?
- 78: Blattwinkelverstellrate kleiner Blattwinkelverstellratengrenzwert?
- 79: Abbremsen
- NA: Notausschalteinrichtung
- SA: Sicherausschalteinrichtung

## Patentansprüche

1. Verfahren zum Betreiben einer Windenergieanlage (10) mit einem Rotor (12), der wenigstens ein winkelverstellbares Rotorblatt (14) aufweist, wobei ein Betriebsparameter durch ein Erfassungsverfahren ermittelt wird und durch ein von einem Betriebsführungssystem unabhängiges Sicherheitssystem überwacht wird und bei Erreichen eines Betriebsparametergrenzwertes durch das Sicherheitssystem ein Abbremsvorgang des Rotors (12) eingeleitet wird, **dadurch gekennzeichnet, dass** die Windenergieanlage (10) in einem ersten Betriebsmodus (71) oder einem zweiten Betriebsmodus (75) betrieben wird, wobei der erste Betriebsmodus (71) ein leistungsoptimierter Normalbetrieb ist und der zweite Betriebsmodus (75) ein drehzahlreduzierter und/oder leistungsreduzierter Betriebsmodus außerhalb des leistungsoptimierten Normalbetriebs ist, wobei der Betriebsparameter eine Rotorbeschleunigung ist und im ersten Betriebsmodus (71) und/oder zweiten Betriebsmodus (75) ein Abbremsvorgang des Rotors (12) eingeleitet wird, wenn eine Rotorbeschleunigung vorherrscht, die größer als ein Rotorbeschleunigungsgrenzwert ist.

2. Verfahren nach Anspruch 1, **dadurch gekennzeichnet, dass** das Anpassen des Betriebsparametergrenzwertes im Betrieb der Windenergieanlage (10) geschieht, wobei insbesondere der zweite Betriebsmodus (75) ein drehzahlreduzierter, leistungsreduzierter und/oder drehmomentreduzierter Betrieb der Windenergieanlage (10) ist, wobei insbesondere der überwachte Betriebsparameter eine Drehzahl des Rotors (12), eine Beschleunigung des Rotors (12), ein Rotorblattverstellwinkel, eine Rotorblattwinkelverstellrate, eine Rotorblattverstellwinkelbeschleunigung, ein Rotordrehmoment oder eine elektrische Abgabeleistung ist.

3. Verfahren nach Anspruch 1 oder 2, **dadurch gekennzeichnet, dass** wenigstens zwei Betriebsparameter überwacht werden und mit jeweils einem dazugehörigen Betriebsparametergrenzwert verglichen werden, wobei insbesondere der Abbremsvorgang nur dann eingeleitet wird, wenn die wenigstens zwei Betriebsparameter jeweils deren dazugehörige Betriebsparametergrenzwerte erreichen, wobei insbesondere die Betriebsparametergrenzwerte wenigstens teilweise voneinander abhängig angepasst werden.

4. Windenergieanlage (10) mit einem Rotor (12), der wenigstens ein winkelverstellbares Rotorblatt (14) aufweist, wobei die Windenergieanlage (10) ein Betriebsführungssystem (15) umfasst, wobei ein Sicherheitssystem (16, 20) zum Überwachen wenigstens eines Betriebsparameters vorgesehen ist, wobei das Sicherheitssystem (16, 20) in dem Betriebsführungssystem (15) ein Signal zum Abbremsen des Rotors (12) liefert oder das Abbremsen des Rotors (12) einleitet, sobald der wenigstens eine Betriebsparameter einen Betriebsparametergrenzwert erreicht, **dadurch gekennzeichnet, dass** das Betriebsführungssystem (15) wenigstens einen ersten Betriebsmodus (71) und einen zweiten Betriebsmodus (75) vorsieht, wobei der erste Betriebsmodus (71) ein leistungsoptimierter Normalbetrieb ist und der zweite Betriebsmodus (75) ein drehzahlreduzierter und/oder leistungsreduzierter Betriebsmodus außerhalb des leistungsorientierten Normalbetriebs ist, wobei wenigstens ein Beschleunigungssensor (33, 34) vorgesehen ist, der im ersten Betriebsmodus (71) und/oder zweiten Betriebsmodus (75) eine Rotorbeschleunigung als Betriebsparameter misst, wobei bei Überschreiten eines Rotorbeschleunigungsgrenzwertes das Sicherheitssystem (16, 20) das Signal zum Abbremsen des Rotors (12) liefert oder das Abbremsen des Rotors (12) einleitet.

5. Windenergieanlage (10) nach Anspruch 4, **dadurch gekennzeichnet, dass** ein Betriebsparameter eine Rotordrehzahl ist, wobei für den ersten Betriebsmodus (71) ein erstes Drehzahlschaltgerät (56.7) in dem Sicherheitssystem (16, 20) vorgesehen ist und für den zweiten Betriebsmodus (75) ein zweites Drehzahlschaltgerät (56.8) in dem Sicherheitssystem (16, 20) vorgesehen ist, wobei wenigstens eines der Drehzahlschaltgeräte (56.7, 56.8) bei Überschreiten eines dem jeweiligen Drehzahlschaltgerät (56.7, 56.8) zugeordneten Drehzahlgrenzwertes das Abbremssignal liefert, wobei insbesondere eine Rotorblattwinkelverstellrate und/oder eine Rotorbeschleunigung ein Betriebsparameter ist, wobei insbesondere die Rotorblattwinkelverstellrate einen Rotorblattwinkelverstellratengrenzwert und die Rotorbeschleunigung einen Rotorbeschleunigungsgrenzwert erreichen müssen, um das Sicherheitssystem (16, 20) zu veranlassen, ein Abbremssignal bereitzustellen oder das Abbremsen des Rotors (12) einzuleiten, wobei insbesondere der Rotorblattwinkelverstellratengrenzwert von dem Rotorbeschleunigungsgrenzwert abhängt.

6. Windenergieanlage (10) nach Anspruch 4 oder 5, **dadurch gekennzeichnet, dass** ein Sensor (56.1 - 56.3, 56.7, 56.8) für den Betriebsparameter in dem Sicherheitssystem (16, 20), insbesondere in einer Sicherheitskette (20), vorgesehen ist.

7. Windenergieanlage (10) nach einem der Ansprüche 4 bis 6, **dadurch gekennzeichnet, dass** das Sicherheitssystem (16, 20) von dem Betriebsführungssystem (15) unabhängig ist, wobei insbesondere das Sicherheitssystem (16, 20) oder Teile hiervon in einem Blattwinkelverstellaktuator (18) oder Blattwinkelerstellregler (17) angeordnet ist.

8. Computerprogramm mit Programmcode-Mitteln, **dadurch gekennzeichnet, dass** die Programmcode-Mittel angepasst sind, um das Verfahren nach einem der Ansprüche 1 bis 3 auszuführen, wenn das Computerprogramm, insbesondere in der Steuer- oder Regelvorrichtung, einer Windenergieanlage (10) läuft.

9. Computerprogramm nach Anspruch 8, das auf einem von einem Computer lesbaren Datenträger gespeichert ist.

## Claims

1. A method of operating a wind turbine (10) with a rotor (12), which includes at least one angularly adjustable rotor blade (14), wherein an operating parameter is determined by a measurement process and is monitored by a safety system independent of an operational management system and when an operational parameter threshold value is reached a braking process of the rotor is initiated by the safety system, **characterised in that** the wind turbine (10) is operated in a first operational mode (71) or a second operational mode (75), wherein the first operational mode (71) is an output-optimised normal operation and the second operational mode (75) is a speed-reduced and/or output-reduced operational mode outside the output-optimised normal operation, wherein the operating parameter is a rotor acceleration and in the first operational mode (71) and/or second operational mode (75) a braking process of the rotor (12) is initiated when a rotor acceleration prevails which is larger than a rotor acceleration threshold value.

2. A method as claimed in claim 1, **characterised in that** the adjustment of the operating parameter threshold value occurs in operation of the wind turbine (10), wherein, in particular, the second operating mode (75) is a speed-reduced, output-reduced and/or torque-reduced operation of the wind turbine (10), wherein, in particular, the monitored operating parameter is a speed of the rotor (12), an acceleration of the rotor (12), a rotor blade adjustment angle, a rotor blade angular adjustment rate, a rotor blade adjustment angle acceleration, a rotor torque or an electrical output power.

3. A method as claimed in claim 1 or 2, **characterised in that** at least two operating parameters are monitored and are compared with a respective associated operating parameter threshold value, wherein, in particular, the braking process is only initiated when the at least two operating parameters reach their associated operating parameter threshold values, wherein, in particular, the operating parameter threshold values are adjusted at least partially independently of one another.

4. A wind turbine (10) with a rotor (12), which includes at least one angularly adjustable rotor blade (14), wherein the wind turbine (10) includes an operational management system (15), wherein a safety system (16, 20) is provided for monitoring at least one operating parameter, wherein the safety system (16, 20) in the operational management system supplies a signal for braking the rotor (12) or initiates the braking of the rotor (12) as soon as the at least one operating parameter reaches an operating parameter threshold value, **characterised in that** the operational management system (15) provides at least one first operational mode (71) and a second operational mode (75), wherein the first operational mode (71) is an output-optimised normal operation and the second operational mode (75) is a speed-reduced and/or output-reduced operational mode outside the output-orientated normal operation, wherein at least one acceleration sensor (33, 34) is provided, which in the first operational mode (71) and/or second operational mode (75) measures a rotor acceleration constituting an operating parameter, wherein when a rotor acceleration threshold value is exceeded, the safety system (16, 20) supplies the signal for braking the rotor (12) or initiates the braking of the rotor (12).

5. A wind turbine (10) as claimed in claim 4, **characterised in that** an operating parameter is a rotor speed, wherein for the first operational mode (71) a first speed switching device (56.7) is provided in the safety system (16, 20) and for the second operational mode (75) a second speed switching device (56.8) is provided in the safety system (16, 20), wherein at least one of the speed switching devices (56.7, 56.8) supplies the braking signal when one of the speed threshold values associated with the respective speed switching device (56.7, 56.8) is exceeded, wherein, in particular, a rotor blade angular adjustment rate and/or a rotor acceleration is an operating parameter, wherein, in particular, the rotor blade angular adjustment rate must reach a rotor blade angular adjustment rate threshold value and the rotor acceleration must reach a rotor acceleration threshold value in order to cause the safety system (16, 20) to provide a braking signal or to initiate the braking of the rotor (12), wherein, in particular, the rotor blade angular adjustment rate threshold value depends on the rotor acceleration threshold value.

6. A wind turbine (10) as claimed in claim 4 or 5, **characterised in that** a sensor (56.1-56.3, 56.7, 56.8) for the operating parameter is provided in the safety system (16, 20), particularly in a safety chain (20).

7. A wind turbine (10) as claimed in one of claims 4 to 6, **characterised in that** the safety system (16, 20) is independent of the operational management system (15), wherein, in particular, the safety system (16, 20) or components thereof is arranged in a blade angle adjustment actuator (18) or a blade angle positioner (17).

8. A computer program with program code means, **characterised in that** the program code means are adapted to perform the method as claimed in one of claims 1 to 3 when the computer program runs, particularly in the control or regulating device of a wind turbine (10).

9. A computer program as claimed in claim 8, which is stored on a data carrier readable by a computer.

## Revendications

1. Procédé pour le fonctionnement d'une installation éolienne (10) comprenant un rotor (12) dont au moins une pale de rotor est à angle réglable (14), dans lequel un paramètre de fonctionnement est déterminé par un procédé de détection et est suivi par une opération d'un système de sécurité indépendant du système de gestion, de manière à ce qu'après avoir atteint une valeur limite d'un paramètre de fonctionnement, le freinage du rotor (12) est lancé par le système de sécurité, **caractérisé en ce que** l'installation éolienne (10) fonctionne selon un premier mode de fonctionnement (71) ou un deuxième mode de fonctionnement (75), le premier mode de fonctionnement (71) étant un mode de fonctionnement normal selon des performances optimisées, le deuxième mode de fonctionnement (75) étant un mode de fonctionnement à vitesse réduite et / ou à puissance réduite en dehors du fonctionnement normale selon des performances optimisées, dans lequel le paramètre de fonctionnement est une accélération du rotor, une décélération du rotor (12) étant déclenchée dans le premier mode de fonctionnement (71) et / ou le deuxième mode de fonctionnement (75) si l'accélération du rotor est supérieure à une valeur limite d'accélération du rotor.

2. Procédé selon la revendication 1, **caractérisé en ce que** le réglage de la valeur limite des paramètres de fonctionnement se produit durant le fonctionnement de l'installation éolienne (10), dans lequel, en particulier, le second mode de fonctionnement (75) est un fonctionnement à vitesse réduite, à puissance réduite et / ou à réduction du couple de fonctionnement de l'éolienne (10), en particulier dans lequel le paramètre de fonctionnement surveillé est la vitesse du rotor (12), l'accélération du rotor (12), l'angle d'ajustement de la pale de rotor, le taux de variation de l'angle de la pale de rotor, l'accélération de l'angle de la pale de rotor, le couple du rotor ou la puissance du moteur électrique en rotation.

3. Procédé selon la revendication 1 ou la revendication 2, **caractérisé en ce que** qu'au moins deux paramètres de fonctionnement sont surveillés et comparés, chacun ayant une valeur limite de fonctionnement associée, le freinage étant en particulier déclenché lorsqu'au moins deux paramètres de fonctionnement atteignent respectivement leur valeur limite de fonctionnement associée, en particulier dans lequel, les valeurs limites sont réglées, au moins partiellement, de manière interdépendante.

4. Installation éolienne (10) ayant un rotor (12) dont au moins une pale de rotor est à angle réglable (14), l'installation éolienne (10) comprenant un système de commande de fonctionnement (15), un système de sécurité (16, 20) étant prévu pour surveiller au moins un paramètre de fonctionnement, dans laquelle le système de sécurité (16, 20) dans le système de gestion (15) fournit un signal pour le freinage du rotor (12) ou déclenche le freinage du rotor (12) lorsque au moins un paramètre de fonctionnement atteint une valeur limite de fonctionnement, **caractérisée en ce que** le système de commande de fonctionnement (15) fournit au moins un premier mode de fonctionnement (71) et un second mode de fonctionnement (75), le premier mode de fonctionnement (71) étant un mode de fonctionnement normal selon des performances optimisées et le second mode de fonctionnement (75) étant un mode de fonctionnement à vitesse réduite et / ou à puissance réduite en dehors du fonctionnement normal selon des performances optimisées, au moins un capteur d'accélération (33, 34) étant prévu, qui, dans le premier mode de fonctionnement (71) et / ou le deuxième mode de fonctionnement (75), mesure l'accélération du rotor en tant que paramètre de fonctionnement, de sorte qu'en cas de dépassement d'une limite d'accélération du rotor, le système de sécurité (16, 20) fournit le signal de freinage du rotor (12) ou déclenche le freinage du rotor (12).

5. Installation éolienne (10) selon la revendication 4, **caractérisée en ce que** la vitesse du rotor est un des paramètre de fonctionnement, dans laquelle, dans un premier mode de fonctionnement (71), un premier dispositif de changement de vitesse (56.7) est prévu dans le système de sécurité (16, 20) et que dans le deuxième mode de fonctionnement (75), un deuxième dispositif de changement de vitesse (56,8) dans le système de sécurité (16, 20) est prévu ; -, installation éolienne dans laquelle, lorsqu'au moins l'un des dispositifs de changement de vitesse (56,7, 56,8) dépasse une limite de vitesse associée à chaque dispositif de changement de vitesse (56.7, 56.8), un signal de décélération est délivré, notamment, l'angle de la pale de rotor réglable et / ou l'accélération du rotor sont l'un des paramètres de fonctionnement, en particulier l'angle de la pale de rotor réglable a une limite d'angle de la pale de rotor réglable et l'accélération du rotor doit atteindre une valeur limite d'accélération du rotor de manière à ce que le système de sécurité (16, 20) fournit un signal de décélération ou initie le freinage du rotor (12), la limite d'angle de la pale de rotor réglable dépendant de la valeur limite d'accélération du rotor.

6. Installation éolienne (10) selon la revendication 4 ou la revendication 5, **caractérisée en ce qu'**un capteur (56,1-56,3, 56,7, 56,8) pour les paramètres de fonctionnement du système de sécurité (16, 20), en particulier dans une chaîne de sécurité (20), est prévu.

7. Installation éolienne (10) selon l'une des revendications 4 à 6, **caractérisée en ce que** le système de sécurité (16, 20) est indépendant du système de commande de fonctionnement (15), en particulier dans laquelle, le système de sécurité (16, 20) ou des parties de celui-ci sont disposés dans un actuateur de la pale à angle réglable (18) ou dans un bouton de réglage de l'angle du rotor (17).

8. Programme d'ordinateur comprenant des moyens de code de programme, **caractérisé en ce que** les moyens de code de programme sont adaptés pour exécuter le procédé selon l'une quelconque des revendications 1 à 3, lorsque ledit programme d'ordinateur, en particulier dans le dispositif de commande ou de régulation d'une installation éolienne (10), est en marche.

9. Programme d'ordinateur selon la revendication 8 qui est stocké sur un support de données lisible par ordinateur.
